# EUROPEAN PATENT APPLICATION

(11) **EP 2 546 761 A1**
(43) Date of publication of application: **16.01.2013**
(21) Application number: 11005643.9
(22) Date of filing: 11.07.2011
(51) Int. Cl.: G06F 17/30

(54) **Improving a computer-implemented service for providing panoramic views of sceneries**

(71) Applicant: Astrium GmbH, 82024 Taufkirchen (DE)
(72) Inventor: Wendel, Jan, Dr., 80336 München (DE)
(74) Representative: Avenhaus, Beate

(57) **Abstract**

The invention relates to a method for providing panoramic views of sceneries by means of a computer-implemented service, wherein the computer-implemented service comprises a server computing device (10) being configured to perform the acts of receiving a data set comprising a location via a data connection (12) from a client computing device (14; S10), selecting a time (S12), retrieving panoramic views for the received location, which best match the selected time, from a database (16) comprising panoramic views of locations being taken at different times (S14), and providing the retrieved panoramic views via the data connection to the client computing device for processing a display comprising the retrieved panoramic views (S16).

## Description

### TECHNICAL FIELD

The invention relates to a method and a system for providing panoramic views of sceneries by means of a computer-implemented service according to claim 1 and 9, respectively.

### BACKGROUND

A prominent example of a computer-implemented service for providing panoramic views of sceneries is Google^{TM} "street view". This service is an enhancement of the Google^{TM} "maps" service, which is a web mapping service and technology offering street maps and route planning services via the internet (the web). Google™ "street view" allows displaying images taken from specialized cars, which take panoramic pictures of sceneries using several cameras. With this technique, users can get a good impression e.g. of the buildings in an area, roads and places, which usually cannot be provided by standard maps.

### SUMMARY OF INVENTION

It is an object of the invention to improve a computer-implemented service for providing panoramic views of sceneries such as for example Google^{TM} "street view".

This object is achieved by the subject matter of the independent claims. Further embodiments are shown by the dependent claims.

As described above, a computer-implemented service for providing panoramic views of sceneries such as Google^{TM} "street view" offers panoramic views of streets and locations. These views of sceneries were taken at a certain time of a certain day of a year and, thus, do not allow to compare day and night, as well as different times of the year. However, a scenery looks significantly different at certain times. For example during night, other landmarks are prominent than during the day, for instance illuminated advertising. For improving a computer-implemented service for providing panoramic views of sceneries, the invention proposes to offer the possibility to view a scenery during different times of the day, the night, and/or the year. The time can be determined automatically by the computer-implemented service to match the current time of the day in the best possible way. Alternatively, the time can be selected by a user.

An embodiment of the invention relates to a method for providing panoramic views of sceneries by means of a computer-implemented service, wherein the computer-implemented service comprises a server computing device being configured to perform the acts of receiving a data set comprising a location via a data connection from a client computing device, selecting a time, retrieving panoramic views for the received location, which best match the selected time, from a database comprising panoramic views of locations being taken at different times, and providing the retrieved panoramic views via the data connection to the client computing device for processing a display comprising the retrieved panoramic views. This allows providing panoramic view of sceneries adapted to a selected time, thus enabling an improved experience for users of a panoramic view provisioning service.

The data set may contain a time selected by the client computing device. The time may be for example selected via a graphical user interface of the client computing device and, thus, a user selected time. However, the also automatically selected by the client computing device, for example depending on a local timer of the client computing device.

The act of selecting a time may comprise one or more of the following acts: selecting the time of sending the data set by the client computing device; selecting the time of receiving the data set by the server computing device; selecting the time contained in the data set. The act of selecting the time of sending the data is helpful for client computing devices, which are located in a time zone different from the time zone of the location of the server computing device providing the panoramic view service, since then the client computing device automatically may receive panoramic views adapted to its local time. Selecting the time of receiving the data set by the server computing device can be for example applied if no panoramic views are available for the time of sending the data set by the client computing device or a time contained in the data set.

The act of selecting a time may comprise one of the following acts: selecting a time of a day; selecting a time of a month; selecting a time of a year. The selection of the time of a day allows providing panoramic views during different day times, while selection of the time of a month or a year allows providing also panoramic view during different seasons, for example during winter, summer, autumn, and spring.

The act of retrieving panoramic views for the received location, which best match the selected time, may comprise the following steps:
a) determining a time interval containing the selected time,
b) generating a database query containing the received location and the determined time interval and inputting the generated database query to the database,
c) checking if panoramic views are returned by the database for the determined time interval, and
d) determining a larger time interval containing the previous time interval and repeating steps b) and c), if no panoramic views are returned, or
e) processing the panoramic views, if panoramic views are returned.

The above steps make it possible to efficiently retrieve panoramic views from the database for a selected time.

A further embodiment of the invention relates to a computer program, which implements a method according to the invention and as described above and enabling an enhanced provisioning of panoramic views of sceneries when executed by a computer. The computer program may be for example installed on a server computer for providing panoramic views of sceneries via a data network such as the web.

According to a further embodiment of the invention, a record carrier storing a computer program according to the invention may be provided, for example a CD-ROM, a DVD, a memory card, a diskette, or a similar data carrier suitable to store the computer program for electronic access.

A further embodiment of the invention relates to a computer being configured by a computer program of the invention and as described before for providing panoramic views of sceneries.

A yet further embodiment of the invention relates to a system for providing panoramic views of sceneries by means of a computer-implemented service, wherein system comprises a server computing device with an interface for data connections with client computing devices and the server computing device comprises means for receiving a data set comprising a location via a data connection from a client computing device, means for selecting a time, means for retrieving panoramic views for the received location, which best match the selected time, from a database comprising panoramic views of locations being taken at different times, and means for providing the retrieved panoramic views via the data connection to the client computing device for processing a display comprising the retrieved panoramic views. The means may be implemented either by hardware or by software, which is executed by the server computing device.

The server computing device may be configured to perform a method of the invention and as described above.

These and other aspects of the invention will be apparent from and elucidated with reference to the embodiments described hereinafter.

The invention will be described in more detail hereinafter with reference to exemplary embodiments. However, the invention is not limited to these exemplary embodiments.

### BRIEF DESCRIPTION OF DRAWINGS

- Fig. 1: shows a flowchart of an embodiment of a method for providing panoramic views of sceneries by means of a computer-implemented service; and
- Fig. 2: shows a block diagram of system for providing panoramic views of sceneries by means of a computer-implemented service.

### DESCRIPTION OF EMBODIMENTS

In the following, functionally similar or identical elements may have the same reference numerals.

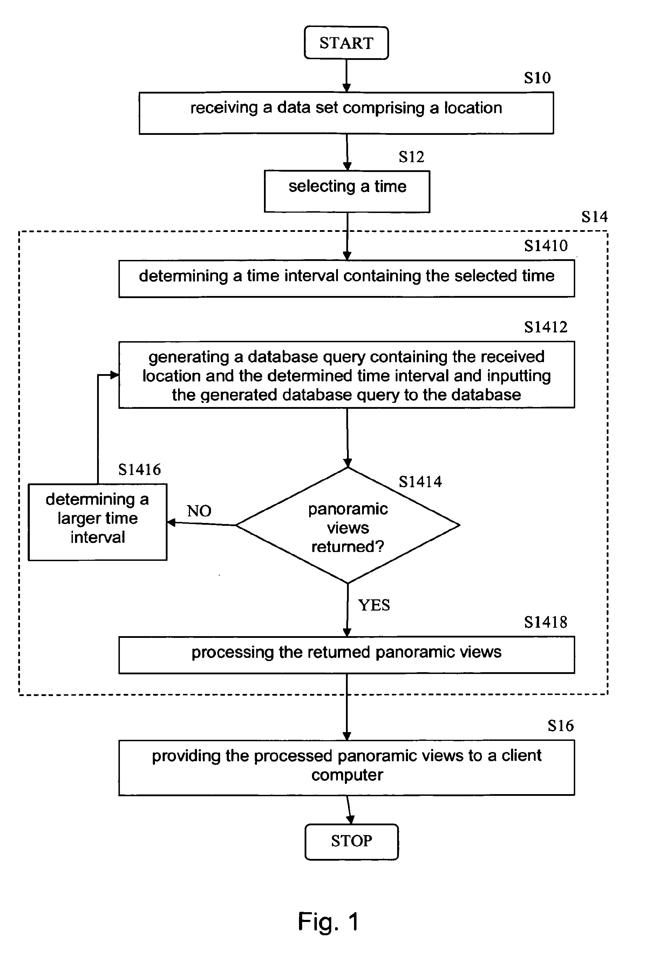

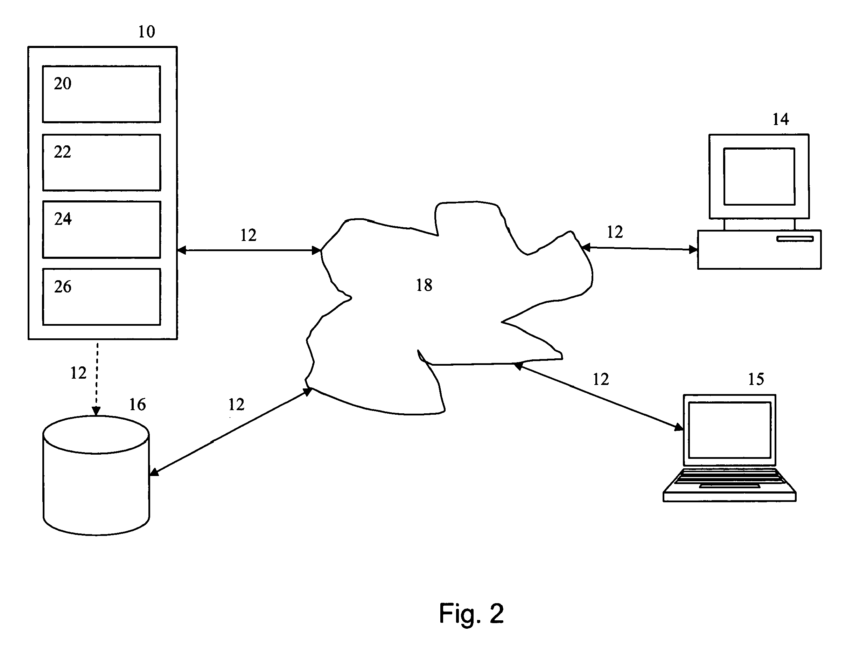

An embodiment of the invention is now described with regard to the flowchart shown in Fig. 1 and the system shown in Fig. 2. The flowchart from Fig. 1 shows the acts performed by a server computer 10 of the system from Fig. 2, which is configured by software implementing the method for providing panoramic views of sceneries according to the invention.

Server computer 10 may host a website and web service offering a panoramic view service for locations selectable for example by a user in the internet or web 18. Client computers such as a Personal Computer (PC) 14 or a laptop computer 15 executing an internet browsing software and having data connections 12 to the web 18 may access the website and web service hosted by the server computer 10. The data connections 12 may be any kind of data connection, such as a LAN (Local Area Network), WLAN (Wireless LAN), DSL (Digital Subscriber Line), HSDPA/HSUPA (High Speed Downlink/Uplink Packet Access).

The website hosted by server computer 10 allows a user to search for geo locations such as cities, places, streets etc. and to request displaying a panoramic view of such sceneries. For example, a user interested in viewing a certain place in a city can search for this place on the website and then select to display a panoramic view of the searched place.

The hosted web service is provided for dedicated client software for accessing the panoramic view service provided by the server computer. For example, such dedicated client software may be installed on mobile devices such as PDAs (Personal Digital Assistants) or smart phones in order to enable a user to comfortably use the panoramic view services also with small displays with limited resolution or with tablet computers with touch display.

Server computer 10 has access to a special database 16 provided by another computer via a data connection 12. The database 16 may be also provided by the server computer 10 itself. Database 16 stores panoramic views of a plurality of locations taken at different times of a day, month, and year. For example, database 16 contains pictures from a place in a city taken at 4 different times of a day, namely in the morning, at high noon, in the afternoon, and in the evening. These four pictures of a day are also stored in the database for different times of the year, namely for spring, summer, autumn, and winter, and also for several days in a month in order to be able to show the place of the city during several different seasons and times of day so that a user can get a good impression of how the place looks during the different times of the day, night, and year. The database 16 can also store panoramic views of location taken in different years. Thus, for example view of a prominent place with high construction activity can be taken over a period of several years and stored in the database 16 in order to be able to show the changing of the appearance of the place over the years.

The website hosted by the server computer 10 may allow a user to select a certain time, for example a clock time, a day in the month, a month, a year. For example, a user may be able to select via an input form field "January 1, 2008, 9 A.M." or "December 2, 2005, 8 P.M." as time for displaying a desired panoramic view of a desired location.

When a user has selected a certain location for a panoramic view on the hosted website or with a dedicated client software, a data set comprising the selected location is created on the client computer 14 or 15 upon user request (for example clicking a link on the website for providing a panoramic view) and transmitted to the website or web service for example via a HTTP-GET or HTTP-POST request. The data set may also comprise any user selected time as described above.

Upon receipt of the data set by the website or web service hosted by the server computer 10, a computer program for processing the request for displaying a panoramic view in correspondence with the data set is executed. The program comprises several modules, which are described in the following in detail. The flowchart of the program is shown in Fig. 1.

First, a software module 20 for receiving the data set processes the received data set by extracting the location and further information such as for example a user selected time contained therein (step S10 in Fig. 1).

After receipt and processing of the data set by the module 20, a software module 22 selects a time (step S12 in Fig. 1). If the data set contains a user selected time, this time will be selected by the module 22. If no user selected time is contained in the data set, the module 22 can determine either the time of sending the data set by the client computer 14 or 15 or the local time of receiving the data set by the server computer 10 as selected time. Thereafter, the location and the selected time are forwarded to a software module 24 for retrieving panoramic views from the database 16 (step S14 in Fig. 1). The module 24 performs in detail steps S1410-S1418 from Fig. 1.

In step S1410, as time interval is determined, which contains the selected time. For example, if the selected time is 12 A.M., a time interval from 11 A.M. to 1 P.M. may be selected. Then in step S1412, a database query is generated which contains as search parameters the location and the time interval determined in step S1410, for example "US, New York, Times Square, 11 A.M.-1 P.M." The so generated query is inputted to the database 16 for retrieving panoramic views of the location for the given time interval. In the following step S1414, it is checked whether any panoramic views are returned by the database. If no panoramic views are returned (for example, return parameter 0 of the database), a larger time interval is determined in step S1416, for example 10 A.M. to 2 P.M. and the steps S1412 and S1414 are repeated with the larger time interval. The loop of steps S1412, S1414 and S1416 is executed until panoramic views are returned. These views are then processed in step S1418, for example by preparing them for transmission over a data connection 12 to the requesting client computer 14 or 15. In step S16, the processed panoramic views are then provided to the requesting client computer 14 or 15 so that this computer can display the panoramic views.

It should be noted that at least some of the functionality of the invention may be performed by hard- or software. If the invention is implemented in software, a single or multiple standard microprocessors or microcontrollers may be used to process a single or multiple algorithms implementing the invention. The word "comprise" as used herein does not exclude other elements or steps. The word "a" or "an" does not exclude a plurality. Reference signs in the claims may not be understood as limiting the scope of the invention.

The present invention allows to enhance computer-implemented panoramic view services such as the Google^{TM} "street view" service by adapting the panoramic view to a selectable time so that a user of such a service can get a better impression of a scenery at a location.

### REFERENCE NUMERALS

- 10: server computer
- 12: data connection
- 14, 15: client computer
- 16: database with panoramic views
- 18: Web
- 20: software module for receiving a data set
- 22: software module for selecting a time
- 24: software module for retrieving panoramic views from a database
- 26: software module for providing the retrieved panoramic views

## Claims

1. A method for providing panoramic views of sceneries by means of a computer-implemented service, wherein the computer-implemented service comprises a server computing device (10) being configured to perform the acts of
- receiving a data set comprising a location via a data connection (12) from a client computing device (14; S10),
- selecting a time (S12),
- retrieving panoramic views for the received location, which best match the selected time, from a database (16) comprising panoramic views of locations being taken at different times (S14, S1410-S1416), and
- providing the retrieved panoramic views via the data connection to the client computing device for processing a display comprising the retrieved panoramic views (S16).

2. The method of claim 1, wherein the data set contains a time selected by the client computing device.

3. The method of claim 1 or 2, wherein the act of selecting a time comprises one or more of the following acts:
- selecting the time of sending the data set by the client computing device;
- selecting the time of receiving the data set by the server computing device;
- selecting the time contained in the data set.

4. The method of claim 1, 2 or 3, wherein the act of selecting a time comprises one of the following acts:
- selecting a time of a day;
- selecting a time of a month;
- selecting a time of a year.

5. The method of any of the preceding claims, wherein the act of retrieving panoramic views (S14) for the received location, which best match the selected time, comprises the following steps:
a) determining a time interval containing the selected time (S1410),
b) generating a database query containing the received location and the determined time interval and inputting the generated database query to the database (S1412),
c) checking if panoramic views are returned by the database for the determined time interval (S1414), and
d) determining a larger time interval containing the previous time interval and repeating steps b) and c), if no panoramic views are returned (S1416), or
e) processing the panoramic views (S1418), if panoramic views are returned.

6. A computer program implementing a method of any of the preceding claims.

7. A record carrier storing a computer program according to claim 6.

8. A computer (10) being configured by a computer program of claim 6 for providing panoramic views of sceneries.

9. A system for providing panoramic views of sceneries by means of a computer-implemented service, wherein system comprises a server computing device (10) with an interface (11) for data connections (12) with client computing devices (14) and the server computing device comprises means (20) for receiving a data set comprising a location via a data connection from a client computing device (S10), means (22) for selecting a time (S12), means (24) for retrieving panoramic views for the received location, which best match the selected time, from a database comprising panoramic views of locations being taken at different times (S14, S1410-S1416), and means (26) for providing the retrieved panoramic views via the data connection to the client computing device for processing a display comprising the retrieved panoramic views (S16).

10. The system of claim 9, wherein the server computing device is configured to perform a method of any of claims 1 to 5.
